# EUROPEAN PATENT SPECIFICATION

(11) **EP 2 476 323 B1**
(45) Date of publication and mention of the grant of the patent: **02.04.2014**
(21) Application number: 11150821.4
(22) Date of filing: 13.01.2011
(51) Int. Cl.: A23N 12/08, A23F 5/04, B01J 8/44

(54) **Roasting device**
Röstvorrichtung
Dispositif de grillage

(43) Date of publication of application: 18.07.2012
(73) Proprietor: Selmi S.r.l., 12069 Santa Vittoria d'Alba (Cuneo) (IT)
(72) Inventor: Selmi, Renato, 12069 Santa Vittoria d'Alba (Cuneo) (IT); Selmi, Paolo, 12069 Santa Vittoria d'Alba (Cuneo) (IT)
(74) Representative: Frontoni, Stefano

(56) References cited:
- US-A- 3 189 460
- US-A- 3 329 506
- US-A- 3 345 180
- US-A- 4 698 916

## Description

The subject of the present invention is a roasting device, in particular for coffee, hazelnuts, or the like, comprising a roasting chamber, which is designed to receive the material to be treated in an accumulation area, and is provided, in said accumulation area, with an opening for inlet of a flow of treatment air against the aforesaid material, said flow being designed to bring into suspension at least one part of said material.

A device of this type is, for example, described in the U.S. patents No. US4698916 and US3329506.

In the solution described in said document, a jet of hot air is projected from beneath upwards within the roasting chamber so as to generate a circulation of coffee beans in suspension.

In the roasting device described in said document the amount of coffee that can be roasted in one and the same cycle depends upon the kinetic energy of the jet of hot air that is introduced into the roasting chamber. In fact, said jet of hot air must have a kinetic energy sufficient for bringing into suspension the entire amount of coffee to be roasted and effecting the aforementioned circulation of the beans. In practical terms, this dependence between amount of coffee to be roasted and kinetic energy (or colloquially power) of the jet of air introduced into the roasting chamber has led to a spread of said machines only for roasting small amounts of coffee at a time, in so far as, otherwise, said machines would have had to be equipped with flow-generating means that are too powerful and cumbersome, and this would inflate enormously the production costs, at the expense on the other hand of the reliability thereof.

In order to enable roasting of larger amounts of material using in any case a simple device that operates with relatively limited power levels, the present applicant came up with the device described in the Italian patent application No. TO2008A000949. The device described in said patent application envisages, within the roasting chamber, a tubular portion that is designed to define, externally, an area in which the material to be roasted poured into the chamber is gathered, and that, in operation, is designed to intercept the air flow introduced into the chamber so as to generate a circulation of material according to an ascending flow, through said tubular portion, and a descending flow of return to the accumulation area, outside said portion. Thanks to a circulation of material of this sort, said device is able to roast homogeneously and efficiently relatively large amounts of material.

The object of the present invention is to provide a roasting device that will afford the same advantages that the prior device proposed by the present applicant guarantees - with respect to the conventional technique represented by the document No. US4698916 - and that at the same time will be characterized by a higher efficiency of operation and by faster processing times.

Said object is achieved via a roasting device having the characteristics of Claim 1.

The device described herein can do without any tubular element inside the roasting chamber, and generate even so, inside it, a circulation of material similar to the one described above with reference to the device described in the patent application No. T02008A000949. In particular, said circulation envisages that, cyclically, part of the material impinged upon by the flow of treatment air is projected upwards, creating an ascending flow of material, and that it then returns, by gravity, into the accumulation area, creating a descending flow, external to the ascending flow indicated above.

The nozzle element provided in said device is such as to deliver a jet of air that is able to make a hole in the mass of material that overlies it, and project a part thereof (and only a part) upwards. In particular, the jet generated has a greater impulse in the central area in order to have a greater capacity of penetration of the material.

Preferred characteristics of the invention are likewise illustrated in the dependent claims.

The claims form an integral part of the technical teaching provided herein in relation to the invention.

The invention will now be described with reference to the attached drawings, which are provided purely by way of non-limiting example and in which:

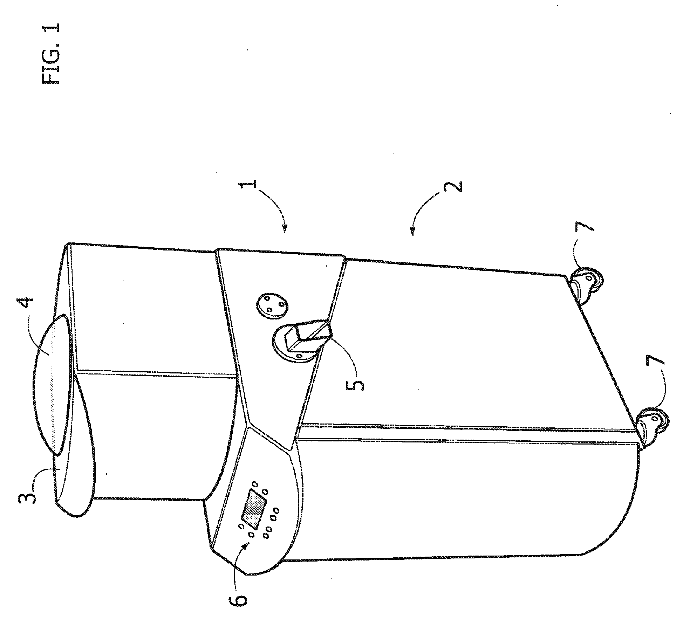

- Figure 1 is a perspective view of the roasting device described herein;
- Figure 2 is a diagram of principle of the device of Figure 1;
- Figure 3A is a perspective view, from above, of a component of the device of Figure 1; and
- Figure 3B is a top plan view of the component of Figure 3A.

In the ensuing description various specific details are illustrated aimed at an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are only for convenience and hence do not define the sphere of protection or the scope of the embodiments.

Designated as a whole by the reference number 1 is the roasting device described herein. It comprises a casing 2 defining a top opening through which the material to be treated is poured into the device, a lid 3 being mounted rocking on the casing 2, for closing said opening. The lid 3 has a transparent portion 4 through which it is possible to control visually the state of treatment of the material being processed. A mouth 5 projecting from a side of the casing 2 constitutes discharge of the treated material. Moreover integrated in the casing 2 is a control panel 6, with which the operator can govern operation of the device 1. The casing 2 is advantageously mounted on swivel wheels 7 to enable easy displacement.

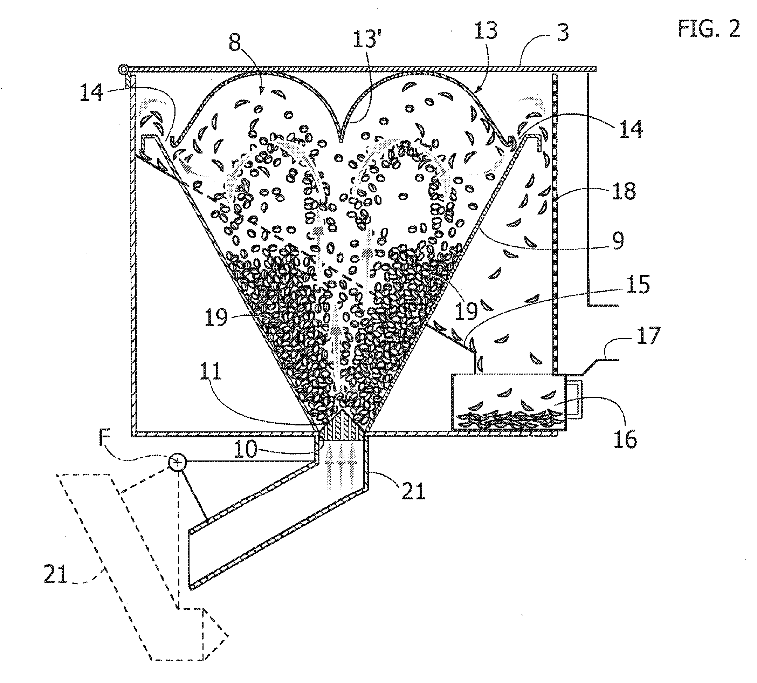

Figure 2 is a diagram of principle of the roasting device 1. Present inside the casing 2 is a roasting chamber 8 delimited by a frustoconical wall 9 converging downwards and delimiting a bottom opening 10.

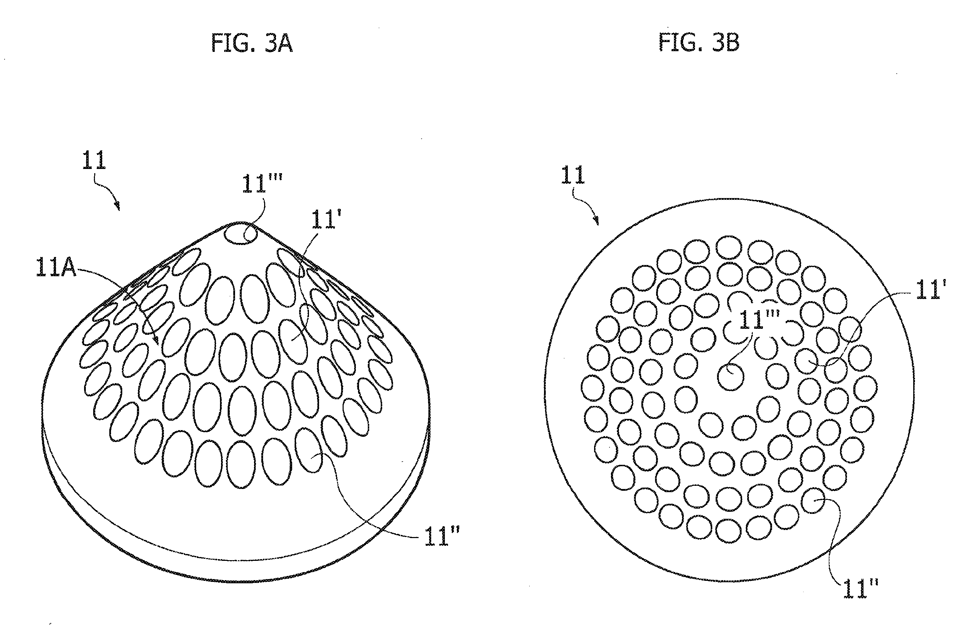

A nozzle element 11 (illustrated in detail in Figure 3) is designed to engage the opening 10. Said element has a body designed to close the opening 10, made in which is a plurality of through holes parallel to the axis of said opening. The configuration of said body is such that at least one first hole 11' of said plurality, which is located in a first position, has a length greater than at least one second hole 11" of said plurality, which is located in a second position, said second position being more peripheral with respect to said first position. Preferably, the holes provided in the nozzle element 11 have all the same diameter. It is clear for a person skilled in the branch that by "peripheral position" is meant a position that is at a given distance from the central geometrical axis of the body of the nozzle element, measured in a plane parallel or coinciding with a plane of section (of the element) that is substantially orthogonal to said axis. In this connection, it should be noted that the overall shape of the body of the nozzle element need not have a circular symmetry, but can instead have all those configurations for which it is possible to define a central region.

As already mentioned previously, the configuration referred to above enables delivery, within the chamber, of an air flow that is able to make a hole in the mass of material to be roasted accumulated in the chamber, and project a part thereof upwards. Said effect is obtained thanks to the fact that the flow delivered by the element 11 has a central part with higher impulse. In preferred embodiments of the invention, the aforesaid plurality of through holes is made, on the body of the nozzle element, starting from one and the same plane that is on the side opposite to the one facing the roasting chamber and is substantially orthogonal to the axial direction of the opening 10.

In various embodiments, as in the one illustrated, the aforesaid plurality of holes is made in a first portion and a second portion of the body of the nozzle element, the second portion having a thickness smaller than the first portion and occupying a region more peripheral with respect to the first portion. In various embodiments, as in the one illustrated, the aforesaid plurality of holes is made in one and the same portion 11A of the body of the nozzle element, which has a thickness increasing towards the centre of the element itself. It is clear that the thickness referred to above is the one measured in the direction along which said holes are made in said portions.

In various embodiments, as in the one illustrated, the aforesaid plurality of holes comprises a plurality of circular series of axial holes, which extend along respective concentric circumferences, and in which the holes of a first circular series are longer than the holes of a second circular series external to the first series (see Figures 3A and 3B).

In various embodiments, as in the one illustrated, the aforesaid plurality of holes is made in a portion 11A having a general configuration that is substantially conical. Said holes are in particular made in directions substantially parallel to the geometrical axis of the conical shape of the body of the element 11.

In various embodiments, as in the one illustrated, the aforesaid plurality of holes comprises a central hole 11''' having a length greater than that of all the other holes.

With reference again to Figure 2, the opening 10 is associated to an air duct 21. In various embodiments, as in the one illustrated, the end of the duct 21 is closed by the element 11, which is anchored thereto, and said duct is mounted rocking on the fixed structure of the device, between a first raised position (illustrated with a solid line in Figure 2), in which the element 11 is brought into engagement with the opening 10, and a second lowered position (illustrated with a dashed line in Figure 2), in which the opening 10 is released from the element 11 and the roasted material can be discharged through the opening 10 itself.

In various embodiments, as in the one illustrated, the roasting chamber 8 is delimited at the top by a wall 13 fixed with respect to the lid 3 of the casing 2. In various embodiments, as in the one illustrated, the wall 13 has a deviator element 13', formed by a central portion with a generic reversed-cone shape, in axis with the element 11, extending from which is a concave wall that surrounds said central portion. As will be seen more clearly in what follows, the element 13' has the function of re-directing the material according to a distribution that is substantially homogeneous in all radial directions of the chamber 8.

Operation of the device 1 will be described hereinafter. First of all, the material to be roasted is introduced into the chamber 8 from the top opening of the casing 2, and accumulates on top of the element 11 engaging with the opening 10. As may be seen in Figure 2, in said condition the duct 21 is in the raised position.

At this point, the device is actuated, and the jet of treatment air starts to being introduced into the roasting chamber via the nozzle element 11.

As already mentioned previously, the jet of air delivered by the element 11 makes a hole in the mass of material that overlies the element 11 itself, and projects a part thereof upwards. The material projected upwards, as a result of the continuous jet of air that comes from beneath, then tends to drop back, passing alongside the ascending flow, towards the area that surrounds the element 11 occupied by the material not intercepted by the jet of air. In the case where the wall 13 is provided with the deviator element 13' described above, the material is projected against it and re-directed according to a distribution substantially homogeneous in all the radial directions of the chamber 8.

As soon as the air flow delivered by the element 11 manages to make a hole in the mass of material to be roasted, there is created an action of suction, in a position corresponding to the element 11 itself, which attracts the surrounding material continuously, which is in turn projected along the path described above. At this point, the circulation of material is triggered the chamber is triggered.

In view of what has been said above, it is consequently clear that the device described herein is able to generate a circulation of material altogether similar to the one generated in the device described in the patent application No. T02008A000949 filed in the name of the present applicant, but without any need to provide the tubular element that characterizes said prior device.

It should moreover be noted that in the device described herein the jet of air delivered by the element 11, apart from penetrating and making a hole in the mass of material that overlies it, also manages to create a flow of material that is decidedly greater than the one - given the same power - that the aforesaid prior device is able to generate. The absence of the tubular element then means that the thermal energy of the air introduced into the chamber is completely exploited for heating the material, instead of being in part wasted in heating the tubular element, as occurs in the prior device. Said aspects mean that the process of operation of the device is as a whole more efficient and faster than that of the prior device indicated above.

As may be seen in Figure 2, also in this case the area up against the walls 9 of the roasting chamber 8 constitutes a sort of tank where the material previously impinged upon by the jet of air accumulates to be again impinged upon by the latter after the underlying material has been processed by the action of the jet of hot air. Thanks to said area of tank, the flow rate of material to be entrained via the jet of air can then be advantageously regulated irrespective of the overall amount of material to be roasted introduced into the roasting chamber. In this way, the roasting process is performed with jets of air of limited power, whatever the amount of material introduced into the chamber.

Once again with reference to Figure 2, between the top wall 13 and the frustoconical wall 9 a passage 14 is provided in communication with the space comprised between the casing 2 and the roasting chamber 8. Said passage 14 enables the waste of the material being processed that is generated during roasting, which is lighter than the material to be roasted, to come out of the chamber 8 and be conveyed via a chute 15 into a drawer 16 that can be taken out of the casing 2, within which it gathers and can then be easily disposed of by an operator.

Following upon the roasting cycle, a step of cooling of the roasted material is envisaged, obtained by injecting within the chamber 8 a jet of cold air in the same mode described above for the jet of hot air.

The jets of air injected within the chamber 8 are generated with means of an appropriate type (not illustrated), which are designed to create an air flow and condition it with hot or cold sources of heat, according to the need. The air introduced into the chamber 8 then comes out of the casing 2 through an outlet mouth 17, before which a grill 18 is set designed to prevent the waste resulting from the roasting cycle from coming out through said outlet mouth 17.

As is schematically illustrated in Figure 2, at the end of the roasting cycle the duct 21 moves into the lowered position (see dashed line in Figure 2), thus releasing the opening 10 from the associated element 11 and enabling discharge of the roasted material through the opening 10 itself.

The roasting device described above is particularly suited for roasting coffee, hazelnuts, or the like.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A roasting device, in particular for coffee, hazelnuts, or the like, comprising a roasting chamber (8), which is designed to receive the material to be treated in an accumulation area (19) and is provided, in said accumulation area, with an opening for inlet (10) of a flow of treatment air against said material, said flow being designed to bring into suspension at least part of said material,
said device being **characterized in that** it comprises a nozzle element (11) having a body (11A) designed to close said opening (10) by turning towards the inside of said chamber, wherein made in said body (11A) is a plurality of through holes substantially parallel to the axis of said opening, the configuration of said body being such that at least one first hole (11') of said plurality, which is in a first position, has a length greater than at least one second hole (11") of said plurality, which is located in a second position, said second position being more peripheral with respect to said first position, wherein said first and second holes are made in one and the same portion (11A) of said body, which has a thickness increasing towards the centre of the element, said second hole being in a more peripheral position than said first hole.

2. The device according to Claim 1, **characterized in that** said plurality of holes are made in the body of the nozzle element starting from one and the same plane of said body, which is on the side opposite to the one facing the roasting chamber and is substantially orthogonal to the axial direction of said opening (10).

3. The device according to any one of the preceding claims, **characterized in that** said plurality of holes comprises a plurality of circular series of axial holes that extend along respective concentric circumferences, and **in that** a first circular series comprises a plurality of said at least one first hole, and a second circular series, external to the first series, comprises a plurality of said at least one second hole.

4. The device according to any one of the preceding claims, **characterized in that** said plurality of holes is made in a portion (11A) of said body having a general configuration that is substantially conical.

5. The device according to any one of the preceding claims, **characterized in that** said plurality of holes comprises a central hole (11''') having a length greater than that of all the other holes.

6. The device according to any one of the preceding claims, **characterized in that** said roasting chamber has side walls (9) converging towards the opening for inlet of said air flow.

7. The device according to any one of the preceding claims, **characterized in that**, on the wall of said chamber opposite to said inlet opening, a wall (13) is provided, which, during operation is designed to repel the material coming out of said tubular portion, said wall having a deviator element (13') designed to direct the material in radial positions of said chamber, external to said opening.

8. The device according to any one of the preceding claims, **characterized in that** said nozzle element is fixed to the end of the duct that carries the air to said opening, said duct (21) being mounted rocking on the fixed structure of the device, between a first raised position, in which said nozzle element (11) is brought into engagement with said opening (10), and a second lowered position, in which said opening (10) is released from said nozzle element (11) and the roasted material can be discharged through said opening.

## Patentansprüche

1. Röstvorrichtung, insbesondere für Kaffee, Haselnüsse oder Ähnliches, umfassend eine Röstkammer (8), die dazu konzipiert ist, das zu behandelnde Material in einem Sammelbereich (19) aufzunehmen und die in diesem Sammelbereich mit einer Einlassöffnung (10) für einen Strom von Behandlungsluft auf das Material versehen ist, wobei dieser Strom so ausgelegt ist, dass wenigstens ein Teil des Materials in Schwebung versetzt wird,
wobei die Vorrichtung **dadurch gekennzeichnet ist, dass** sie ein Düsenelement (11) mit einem Körper (11A) umfasst, das dazu eingerichtet ist, die Öffnung (10) durch Drehen in Richtung der Innenseite der Kammer zu schließen, wobei in diesem Körper (11A) eine Vielzahl von Durchgangsöffnungen ausgebildet ist, die im Wesentlichen parallel zur Achse der Öffnung angeordnet sind, wobei der Körper so aufgebaut ist, dass mindestens eine erste Öffnung (11') der Vielzahl, die in einer ersten Position angeordnet ist, eine größere Länge als mindestens eine zweite Öffnung (11") der Vielzahl aufweist, die in einer zweiten Position angeordnet ist, wobei sich die zweite Position bezüglich der ersten Position weiter am Rand befindet, wobei die erste und zweite Öffnung in ein und demselben Teil (11A) des Körpers ausgebildet sind, der eine Dicke aufweist, die in Richtung der Mitte des Elements zunimmt, und wobei sich die zweite Öffnung weiter am Rand befindet als die erste Öffnung.

2. Vorrichtung nach Anspruch 1, **dadurch gekennzeichnet, dass** die Vielzahl von Öffnungen in dem Körper des Düsenelements beginnend in ein und derselben Ebene des Körpers ausgebildet sind, die sich auf der Seite gegenüber derjenigen Seite befindet, die der Röstkammer zugewandet ist und die im Wesentlichen orthogonal zu der axialen Richtung der Öffnung (10) verläuft.

3. Vorrichtung nach einem der vorhergehenden Ansprüche, **dadurch gekennzeichnet, dass** die Vielzahl der Öffnungen eine Vielzahl an kreisförmigen Reihen von axialen Öffnungen umfasst, die sich jeweils entlang konzentrischen Kreisumfängen erstrecken, und dadurch, dass eine erste kreisförmige Reihe eine Vielzahl der mindestens einen ersten Öffnungen umfasst und eine zweite kreisförmige Reihe außerhalb der ersten Reihe eine Vielzahl der mindestens einen zweiten Öffnungen umfasst.

4. Vorrichtung nach einem der vorhergehenden Ansprüche, **dadurch gekennzeichnet, dass** die Vielzahl der Öffnungen in einem Teil (11A) des Körpers ausgebildet ist, der einen allgemeinen Aufbau aufweist, der im Wesentlichen konisch ist.

5. Vorrichtung nach einem der vorhergehenden Ansprüche, **dadurch gekennzeichnet, dass** die Vielzahl der Öffnungen eine mittlere Öffnung (11"') mit einer Länge umfasst, die größer als die aller anderen Öffnungen ist.

6. Vorrichtung nach einem der vorhergehenden Ansprüche, **dadurch gekennzeichnet, dass** die Röstkammer Seitenwände (9) aufweist, die in Richtung der Einlassöffnung für den Luftstrom zusammenlaufen.

7. Vorrichtung nach einem der vorhergehenden Ansprüche, **dadurch gekennzeichnet, dass** an der Wand der Kammer gegenüber der Einlassöffnung eine Wand (13) angeordnet und dazu eingerichtet ist, während des Betriebs aus dem röhrenförmigen Abschnitt kommendes Material zurückzustoßen, wobei diese Wand ein Deviatorelement (13') aufweist, das dazu eingerichtet ist, das Material in radiale Positionen der Kammer außerhalb der Öffnung zu leiten.

8. Vorrichtung nach einem der vorhergehenden Ansprüche, **dadurch gekennzeichnet, dass** das Düsenelement am Ende des Kanals befestigt ist, der die Luft zu der Öffnung leitet, wobei der Kanal (21) so an der festen Struktur der Vorrichtung montiert ist, dass er sich zwischen einer angehobenen Position, in der das Düsenelement (11) in Eingriff mit der Öffnung (10) kommt und einer zweiten abgesenkten Position hin- und herbewegt, in der die Öffnung (10) von dem Düsenelement (11) getrennt ist und das geröstete Material durch die Öffnung abgeführt werden kann.

## Revendications

1. Dispositif de torréfaction, en particulier pour le café, les noisettes ou similaires, comprenant une chambre de torréfaction (8) qui est conçue pour recevoir la matière à traiter dans une zone d'accumulation (19) et est prévue, dans ladite zone d'accumulation, avec une ouverture pour l'entrée (10) d'un écoulement d'air de traitement contre ladite matière, ledit écoulement étant conçu pour amener en suspension au moins une partie de ladite matière,
ledit dispositif étant **caractérisé en ce qu'**il comprend un élément de buse (11) ayant un corps (11A) conçu pour fermer ladite ouverture (10) en tournant vers l'intérieur de ladite chambre, dans lequel, pratiqués dans ledit corps (11A), on trouve une pluralité de trous de passage sensiblement parallèles à l'axe de ladite ouverture, la configuration dudit corps étant telle qu'au moins un premier trou (11') de ladite pluralité, qui est dans une première position, a une longueur supérieure à au moins un deuxième trou (11") de ladite pluralité, qui est positionné dans une deuxième position, ladite deuxième position étant plus périphérique par rapport à ladite première position, dans lequel lesdits premier et deuxième trous sont réalisés dans une seule et même partie (11A) desdits corps qui a une épaisseur augmentant vers le centre de l'élément, ledit deuxième trou étant dans une position plus périphérique que ledit premier trou.

2. Dispositif selon la revendication 1, **caractérisé en ce que** ladite pluralité de trous est réalisée dans le corps de l'élément de buse à partir du seul et même plan dudit corps, qui est du côté opposé à celui faisant face à la chambre de torréfaction et est sensiblement orthogonal par rapport à la direction axiale de ladite ouverture (10).

3. Dispositif selon l'une quelconque des revendications précédentes, **caractérisé en ce que** ladite pluralité de trous comprend une pluralité de séries circulaires de trous axiaux qui s'étendent le long de circonférences concentriques respectives et **en ce qu'**une première série circulaire comprend une pluralité dudit au moins un premier trou, et une seconde série circulaire, à l'extérieur de la première série, comprend une pluralité dudit au moins un second trou.

4. Dispositif selon l'une quelconque des revendications précédentes, **caractérisé en ce que** ladite pluralité de trous est réalisée dans une partie (11A) dudit corps ayant une configuration générale qui est sensiblement conique.

5. Dispositif selon l'une quelconque des revendications précédentes, **caractérisé en ce que** ladite pluralité de trous comprend un trou central (11"') ayant une longueur supérieure à celle de tous les autres trous.

6. Dispositif selon l'une quelconque des revendications précédentes, **caractérisé en ce que** ladite chambre de torréfaction a des parois latérales (9) convergeant vers l'ouverture pour l'entrée dudit écoulement d'air.

7. Dispositif selon l'une quelconque des revendications précédentes, **caractérisé en ce que**, sur la paroi de ladite chambre opposée à ladite ouverture d'entrée, on prévoit une paroi (13) qui, pendant le fonctionnement, est conçue pour repousser la matière sortant de ladite partie tubulaire, ladite paroi ayant un élément de déviation (13') conçu pour diriger la matière dans des positions radiales de ladite chambre, à l'extérieur de ladite ouverture.

8. Dispositif selon l'une quelconque des revendications précédentes, **caractérisé en ce que** ledit élément de buse est fixé à l'extrémité du conduit qui transporte l'air jusqu'à ladite ouverture, ledit conduit (21) étant monté en basculant sur la structure fixe du dispositif, entre une première position levée dans laquelle ledit élément de buse (11) est amené en mise en prise avec ladite ouverture (10), et une seconde position abaissée, dans laquelle ladite ouverture (10) est libérée dudit élément de buse (11) et la matière torréfiée peut être déchargée par ladite ouverture.
